# FASCICULE DE BREVET EUROPEEN

(11) **EP 3 263 899 B1**
(45) Date de publication et mention de la délivrance du brevet: **07.08.2019**
(21) Numéro de dépôt: 17176171.1
(22) Date de dépôt: 15.06.2017
(51) Int. Cl.: F04C 2/10, F04C 15/00

(54) **POMPE À ENGRENAGE INTERNE**
INNENZAHNRADPUMPE
INTERNAL GEAR PUMP

(30) Priorité: 29.06.2016 BE 201605502
(43) Date de publication de la demande: 03.01.2018
(73) Titulaire: Safran Aero Boosters SA, 4041 Herstal (BE)
(72) Inventeur: CORNET, Albert, 4800 Verviers (BE); CHENOUX, Mathieu, 6700 Arlon (BE)
(74) Mandataire: Gevers Patents

(56) Documents cités:
- DE-A1- 19 814 545
- US-A1- 2002 122 736
- US-A1- 2006 029 509
- US-B1- 6 270 169

## Description

### Domaine technique

L'invention concerne une pompe à engrenage interne pouvant être utilisée dans une turbomachine d'aéronef.

### Art antérieur

DE102011100105 divulgue une pompe à engrenage interne comprenant un pignon et une couronne. La couronne est disposée dans un alésage d'un boitier. Un espace basse pression et un espace haute pression se trouvent entre la couronne et le pignon. L'espace haute pression est en communication fluidique avec une première chambre de pression formant une première extension angulaire de l'alésage du boitier sur une surface périphérique externe de la couronne. Le but de la première chambre de pression est de modifier le champ de pression dans la pompe afin de réduire le jeu entre les dents du pignon et les dents de la couronne dans leur zone de contact.

La première chambre de pression est présente sur un peu moins d'un quart de la circonférence de la couronne. D'après ce document, placer la première chambre de pression de façon radialement adjacente à l'espace basse pression permet de réduire le jeu entre les dents du pignon et les dents de la couronne.

Un problème de la pompe à engrenage connue est que le champ de pression dans la couronne résultant des différences de pression entraine une poussée radiale de la couronne vers la paroi interne de l'alésage du boitier. En effet, le champ de pression pousse la couronne vers le pignon dans leur zone de contact et donc pousse aussi la couronne vers la paroi interne de l'alésage dans la prolongation radiale de cette zone de contact. Cette poussée radiale entraine des frottements et une usure accélérée de la paroi interne de l'alésage du boitier.

Les documents US6270169 B1 et DE 198 14 545 A1 décrivent une pompe à engrenage interne comprenant un pignon apte à tourner autour d'un premier axe de rotation et une couronne disposée autour du pignon et apte à tourner autour d'un deuxième axe de rotation différent du premier axe de rotation et parallèle à ce dernier, le pignon et la couronne étant disposés de façon à délimiter un espace de travail comprenant un espace haute pression et un espace basse pression.

### Résumé de l'invention

Un des buts de l'invention est de fournir une pompe à engrenage dans laquelle les frottements entre la couronne et l'élément qui la supporte radialement sont réduits. A cet effet, l'invention propose une pompe à engrenage interne comprenant:
- un pignon apte à tourner autour d'un premier axe de rotation,
- une couronne disposée autour du pignon, présentant un pourtour cylindrique et apte à tourner autour d'un deuxième axe de rotation différent du premier axe de rotation et parallèle à ce dernier, le pignon et la couronne étant disposés de façon à délimiter un espace de travail comprenant un espace haute pression et un espace basse pression,
- un premier élément de support disposé d'un premier côté de la couronne pour limiter son déplacement dans un premier sens selon une première direction essentiellement parallèle aux premier et deuxième axes de rotation,
- un deuxième élément de support disposé d'un deuxième côté de la couronne pour limiter son déplacement dans un deuxième sens opposé au premier sens et selon la première direction,
- une paroi cylindrique disposée autour de la couronne pour limiter son déplacement dans un plan essentiellement perpendiculaire au deuxième axe de rotation,
- un premier évidement haute pression en arc de cercle et en contact fluidique avec une première partie du pourtour cylindrique de la couronne,
- un premier évidement basse pression en arc de cercle et en contact fluidique avec une deuxième partie du pourtour cylindrique de la couronne, le premier évidement haute pression et le premier évidemment basse pression étant disjoints,
- un premier moyen d'acheminement haute pression formant une connexion fluidique entre l'espace haute pression et le premier évidement haute pression, et
- un premier moyen d'acheminement basse pression formant une connexion fluidique entre l'espace basse pression et le premier évidement basse pression,
caractérisée en ce que
- le premier évidemment haute pression est symétrique par rapport à un deuxième plan passant par le deuxième axe de rotation et perpendiculaire à un premier plan passant par les premier et deuxième axes de rotation, et en ce que
- le premier évidemment basse pression est symétrique par rapport audit deuxième plan.

L'espace basse pression est la partie de l'espace de travail dans laquelle rentre initialement le liquide. Le liquide est ensuite comprimé et poussé par le pignon et la couronne vers l'espace haute pression. Le liquide sort ensuite de l'espace de travail, à une pression plus grande que lorsqu'il est entré dans l'espace de travail. Il est aussi possible que le liquide entre dans la pompe par l'espace haute pression et en sorte par l'espace basse pression.

Le premier plan, défini comme le plan passant par les axes de rotation de la couronne du pignon, passe par la zone de contact entre couronne et pignon. Le côté du premier plan dans lequel la couronne et le pignon s'éloignent l'un de l'autre comprend l'espace basse pression et le côté du premier plan dans lequel la couronne et le pignon se rapprochent l'un de l'autre comprend l'espace haute pression.

Le liquide de l'espace haute pression exerce une première poussée radiale interne sur la couronne. Le liquide de l'espace basse pression exerce une deuxième poussée radiale interne sur la couronne, opposée à la première poussée radiale. La couronne subit donc une poussée globale radiale résultant de la différence entre ces poussées qui la pousse vers la paroi cylindrique dans une direction perpendiculaire au premier plan.

L'invention permet de créer une poussée dans l'autre sens afin de contrecarrer la poussée de la couronne due aux espaces haute pression et basse pression. Dans l'invention, le liquide présent entre la couronne et le pignon est amené jusqu'au pourtour de la couronne par des moyens d'acheminement, puis, le liquide se répand dans les évidements en arc de cercle. Le liquide se répand aussi préférentiellement entre la couronne et la paroi cylindrique. Une force radiale est générée localement par chaque élément de liquide présent dans les évidements. En utilisant des évidements symétriques par rapport au deuxième plan, l'invention permet que les composantes des forces générées par les éléments de liquide des évidements qui sont parallèles au premier plan s'annulent. Seules restent les composantes perpendiculaires au premier plan qui permettent de contrebalancer, au moins partiellement, la poussée dans la couronne due aux espaces haute pression et basse pression.

Les évidements permettent de créer des zones en arc de cercle dans lesquelles la pression sur la paroi cylindrique est constante.

En outre, la pression radiale vers l'intérieur générée par chaque élément de liquide des évidements sur la couronne éloigne la couronne de la paroi cylindrique, réduisant ainsi le frottement de la couronne contre la paroi cylindrique.

De plus, si le liquide circulant dans la pompe est un lubrifiant, en amener entre la couronne et la paroi cylindrique diminue encore le frottement entre la couronne et la paroi cylindrique.

La pompe à engrenage interne selon l'invention peut par exemple être un gerotor.

La paroi cylindrique disposée autour de la couronne peut être dénommé palier de la couronne.

Le pignon comprend des dents sur une surface extérieure. La couronne comprend des dents sur une surface intérieure.

Le premier axe de rotation, c'est-à-dire l'axe de rotation du pignon, est préférentiellement l'axe de symétrie d'un cercle circonscrit au pignon. Le deuxième axe de rotation, c'est-à-dire l'axe de rotation de la couronne, est préférentiellement l'axe de symétrie du pourtour cylindrique de la couronne.

Le premier (respectivement deuxième) élément de support jouxte le pignon et la couronne, dans le sens où il n'y a pas d'élément solide entre eux. Il peut y avoir du liquide entre eux. Les premier et deuxième éléments de support peuvent être appelés premier et deuxième flasques. Le premier et le deuxième éléments de support ou leurs bassins délimitent l'espace de travail dans la direction parallèle aux premier et deuxième axes.

Le premier et le deuxième côtés de la couronne peuvent être visualisés en considérant qu'ils sont séparés par un troisième plan, perpendiculaire aux premier et deuxième plans et passant au milieu de la couronne, ce milieu étant pris dans la première direction. Le deuxième côté de la couronne est opposé au premier côté de la couronne.

Dans le cadre du présent document, un élément "basse pression" est un élément destiné à recevoir un fluide à basse pression, c'est-à-dire un fluide avant qu'il ne soit compressé par la pompe ou au début de sa phase de compression par la pompe. Un élément "basse pression" pourrait aussi être dénommé élément "pour fluide avant compression", ou un "premier", "deuxième", "troisième", ou "quatrième" élément.

Dans le cadre du présent document, un élément "haute pression" est un élément destiné à recevoir un fluide à haute pression, c'est-à-dire un fluide après qu'il a été compressé par la pompe ou à la fin de sa phase de compression par la pompe. Un élément "haute pression" pourrait aussi être dénommé élément "pour fluide après compression", ou un "premier", "deuxième", "troisième", ou "quatrième" élément.

La paroi cylindrique est un élément de support radial de la couronne. Elle est préférentiellement un palier radial de la couronne, par exemple un palier lisse. Elle permet de limiter le déplacement de la couronne selon toute direction perpendiculaire au deuxième axe de rotation.

Le premier évidement haute pression et le premier évidement basse pression forment chacun un arc de cercle d'un cercle de rayon proche du rayon du pourtour de la couronne. Les évidements sont préférentiellement peu profonds. Préférentiellement la profondeur des évidements est inférieure au quart de la hauteur de l'élément dans lequel ils sont creusés.

Le contact fluidique entre les évidements et le pourtour cylindrique de la couronne est préférentiellement un contact fluidique entre les évidements et l'arête du premier côté ou l'arête du deuxième côté du pourtour cylindrique de la couronne. Au départ de cette arête, le jeu entre le pourtour cylindrique de la couronne et la paroi cylindrique permet que le fluide présent dans l'évidement se répande entre le pourtour cylindrique de la couronne et la paroi cylindrique.

La symétrie du premier évidemment haute (respectivement basse) pression par rapport au deuxième plan est une symétrie orthogonale par rapport à ce plan. Autrement dit, le premier évidemment haute (respectivement basse) pression est sa propre image miroir dans le deuxième plan.

La pompe est préférentiellement destinée à pomper un liquide, plus préférentiellement un lubrifiant, encore plus préférentiellement de l'huile.

La pompe peut par exemple être utilisée dans un aéronef.

Préférentiellement, le premier évidement basse pression est de plus grande extension angulaire que le premier évidement haute pression.

L'extension angulaire est l'angle de l'arc de cercle pris par rapport au deuxième axe de rotation. Les inventeurs ont trouvé qu'une telle configuration est particulièrement intéressante pour diminuer les frottements entre la couronne et la paroi cylindrique.

Préférentiellement,, l'extension angulaire du premier évidement basse pression est supérieure à 90°, préférentiellement supérieure à 180°.

Comme la pression des éléments de liquide éloigne la couronne de la paroi cylindrique et comme ce liquide permet la lubrification, il est intéressant que les évidements aient une grande extension angulaire.

Préférentiellement, le premier évidement haute pression est au moins partiellement, préférentiellement totalement, du même côté du premier plan que l'espace haute pression; et le premier évidement basse pression est au moins partiellement du même côté du premier plan que l'espace basse pression.

Par conséquent, le premier évidement basse pression est au moins partiellement de l'autre côté du premier plan que le premier évidement haute pression. La jonction fluidique entre le premier moyen d'acheminement haute pression et le premier évidement haute pression est préférentiellement du même côté du premier plan que l'espace haute pression. La jonction fluidique entre le premier moyen d'acheminement basse pression et le premier évidement basse pression est préférentiellement du même côté du premier plan que l'espace basse pression. Une telle géométrie simplifie la connexion fluidique entre l'espace haute pression et l'évidement haute pression et la connexion fluidique entre l'espace basse pression et l'évidement basse pression.

Préférentiellement, le premier moyen d'acheminement haute pression comprend un premier bassin haute pression dans le premier élément de support, et le premier moyen d'acheminement basse pression comprend un premier bassin basse pression dans le premier élément de support.

Les premiers bassins sont des cavités dans le premier élément de support.

Préférentiellement, le premier bassin haute pression comprend une partie traversant le premier élément de support et faisant partie d'un conduit de sortie de liquide de la pompe et le premier bassin basse pression comprend une partie traversant le premier élément de support et faisant partie d'un conduit d'entrée de liquide dans la pompe.

Préférentiellement, les entrée et sortie de liquide se font parallèlement aux premier et deuxième axes.

Préférentiellement, le premier moyen d'acheminement haute pression comprend une première rainure radiale haute pression dans le premier élément de support formant une connexion fluidique entre le premier bassin haute pression et le premier évidement haute pression; et le premier moyen d'acheminement basse pression comprend une première rainure radiale basse pression dans le premier élément de support formant une connexion fluidique entre le premier bassin basse pression et le premier évidement basse pression.

La première rainure radiale haute (respectivement basse) pression permet un chemin direct entre le premier bassin haute (respectivement basse) pression, qui est en contact direct avec l'espace haute (respectivement basse) pression, et le premier évidement haute (respectivement basse) pression. En outre, les rainures radiales sont faciles à usiner. La première rainure radiale haute pression est préférentiellement dans la prolongation de la première rainure radiale basse pression. Les rainures radiales sont préférentiellement dans le deuxième plan. Cela permet qu'elles amènent directement le liquide aux points centraux des évidements, puisque ceux-ci sont symétriques par rapport au deuxième plan. Cette configuration fournit une pompe particulièrement bien équilibrée et facile à fabriquer.

Préférentiellement, le premier bassin haute pression s'étend jusqu'au premier évidement haute pression; et le premier bassin basse pression s'étend jusqu'au premier évidement basse pression.

Préférentiellement, les entrée et sortie de liquide se font perpendiculairement aux premier et deuxième axes, les bassins formant des entrée et sortie radiales. Le liquide passe alors préférentiellement dans le premier évidement basse pression avant de remplir l'espace basse pression.

Préférentiellement, les premiers évidements comprennent des évidements dans le premier élément de support.

Cela permet d'avoir des évidements de grande extension angulaire sans diminuer la surface de support radial de la couronne car les évidements sont décalés axialement par rapport à la couronne. En outre, en particulier dans le cas où le premier élément de support comprend un bassin, l'usinage supplémentaire d'un évidement est aisé. Les évidements ne traversent préférentiellement pas le premier élément de support.

Préférentiellement, les premiers évidements comprennent des évidements dans la paroi cylindrique.

Cela peut être en plus ou à la place des évidements dans le premier, et éventuellement le deuxième, élément de support.

Préférentiellement, les premiers évidements sont des chanfreins, des congés de raccordement, des gorges, ou des rainures.

Préférentiellement, le premier évidement haute pression, le premier évidement basse pression, le premier moyen d'acheminement haute pression et le premier moyen d'acheminement basse pression sont situés du premier côté de la couronne.

Cela évite que les évidements ne créent un déséquilibre. En outre, cela simplifie la fabrication des pièces de la pompe.

Préférentiellement, la pompe à engrenage interne comprend en outre, situés du deuxième côté de la couronne:
- un deuxième évidement haute pression en arc de cercle, en contact fluidique avec le pourtour cylindrique de la couronne sur la première partie de ce dernier et symétrique par rapport au deuxième plan,
- un deuxième évidement basse pression en arc de cercle, en contact fluidique avec le pourtour cylindrique de la couronne sur la deuxième partie de ce dernier et symétrique par rapport au deuxième plan, le deuxième évidement haute pression et le deuxième évidemment basse pression étant disjoints,

- un deuxième moyen d'acheminement haute pression formant une connexion fluidique entre l'espace haute pression et le deuxième évidement haute pression, et
- un deuxième moyen d'acheminement basse pression formant une connexion fluidique entre l'espace basse pression et le deuxième évidement basse pression.

La présence des deuxièmes moyens d'acheminement et deuxièmes évidements permet un meilleur équilibrage des forces axiales et permet d'augmenter l'effet de poussée radiale dû aux évidements. Le deuxième évidement haute pression (respectivement basse pression) est symétrique au premier évidement haute pression (respectivement basse pression) par rapport au troisième plan.

Préférentiellement, le premier élément de support fait partie d'un carter de la pompe, et le deuxième élément de support fait partie d'un couvercle de la pompe.

Cette réalisation de l'invention permet de réduire le nombre de maillons dans la chaîne de côtes de la pompe. Le carter et le couvercle peuvent former un boitier pour la pompe.

L'invention propose en outre une turbomachine, par exemple une turbomachine d'aéronef, comprenant une pompe à engrenage interne selon une des réalisations de l'invention.

L'invention propose en outre un aéronef comprenant une pompe à engrenage interne selon une des réalisations de l'invention.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 montre une vue en coupe horizontale d'une pompe à engrenage interne selon une réalisation de l'invention,
- la figure 2 montre une vue en coupe verticale d'une pompe à engrenage selon une réalisation préférée de l'invention,
- la figure 3 montre une vue en perspective du dessus du premier élément de support selon la réalisation préférée de l'invention,
- la figure 4 montre une vue en coupe verticale d'une pompe à engrenage selon une première réalisation alternative de l'invention,
- la figure 5 montre une vue en perspective du dessus du premier élément de support selon la première réalisation alternative de l'invention,
- la figure 6 montre une vue en coupe verticale d'une pompe à engrenage selon une deuxième réalisation alternative de l'invention,
- la figure 7a montre une vue en perspective du dessus du premier élément de support selon la deuxième réalisation alternative de l'invention,
- la figure 7b montre une vue en perspective du dessous de la paroi cylindrique selon la deuxième réalisation alternative de l'invention, et
- la figure 8 est une représentation de la pression radiale s'exerçant sur le pourtour cylindrique de la couronne dans une pompe selon la réalisation préférée de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

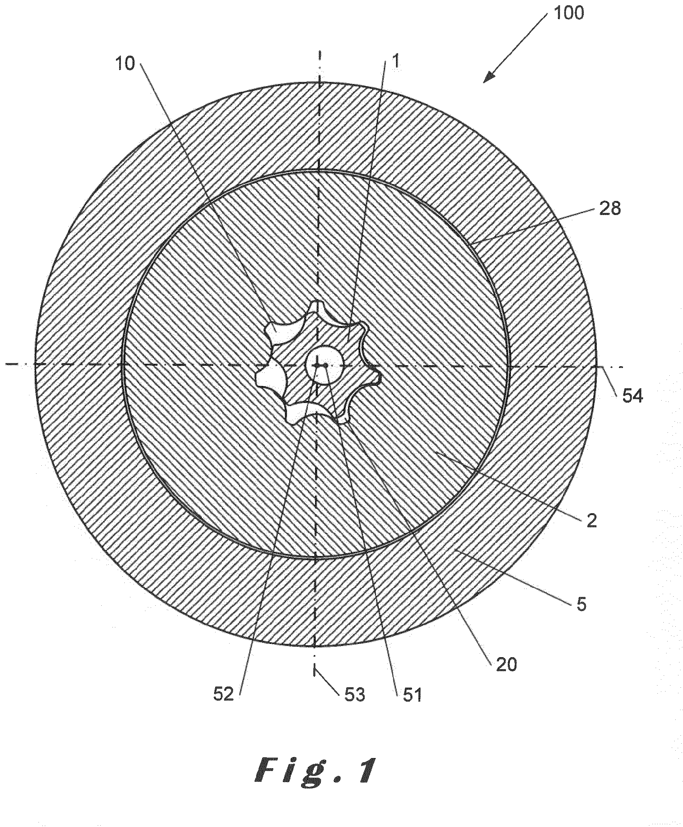

La figure 1 montre une vue en coupe horizontale d'une pompe 100 à engrenage interne selon une réalisation de l'invention. La pompe 100 comporte un pignon 1 ayant un premier axe de rotation 51 et une couronne 2 ayant un deuxième axe de rotation 52. Les premier 51 et deuxième 52 axes de rotation sont différents l'un de l'autre et parallèles entre eux. Le plan passant par les premier 51 et deuxième 52 axes de rotation est appelé premier plan 54. Le plan perpendiculaire au premier plan 54 et passant par le deuxième axe de rotation 52 est appelé deuxième plan 53.

La couronne 2 a un pourtour cylindrique 28. Celui-ci est entouré par une paroi cylindrique 5. La paroi cylindrique 5 est un élément ayant une surface interne cylindrique et dont la surface externe peut avoir une forme quelconque, par exemple cylindrique ou de section polygonale. La paroi cylindrique 5 supporte la couronne 2 dans toute direction perpendiculaire au deuxième axe de rotation 52.

La couronne 2 a un creux central dans lequel est situé le pignon 1. La surface de ce creux présente des dents en renfoncement. Le pignon 1 a des dents en saillie prévues pour s'engager dans les dents en renfoncement de la couronne 2. L'espace entre la couronne 2 et le pignon 1 est un espace de travail de la pompe qui inclut un espace haute pression 10 et un espace basse pression 20. L'espace haute pression 10 et l'espace basse pression 20 sont séparés par la pensée par le premier plan 54.

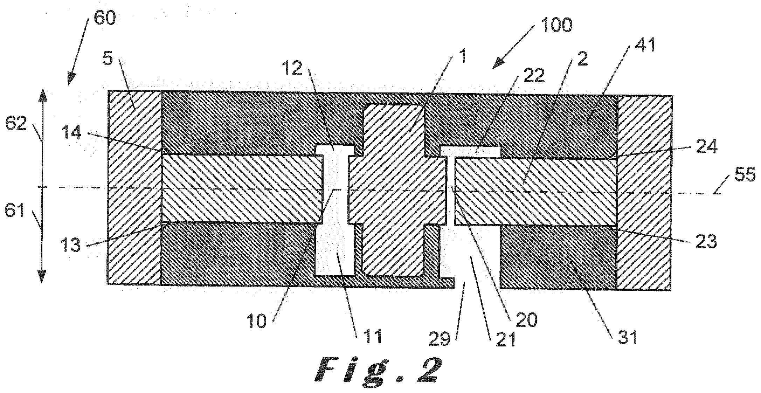

La figure 2 montre une vue en coupe verticale d'une pompe 100 à engrenage selon une réalisation préférée de l'invention. Un troisième plan 55, perpendiculaire aux premier 54 et deuxième 53 plans et passant au milieu de la couronne 2, y est visible. La pompe 100 comprend un premier élément de support 31 disposé d'un premier côté de la couronne 2 et un deuxième élément de support 41 disposé d'un deuxième côté de la couronne 2. Les éléments de support 31, 41 permettent de limiter le mouvement de la couronne 2 et du pignon 1 dans les deux sens 61, 62 selon une direction parallèle 60 aux premier 51 et deuxième 52 axes de rotation.

Dans le plan de la coupe visible à la figure 2, l'espace basse pression 20 est limité du premier côté par un premier bassin basse pression 21 faisant partie du premier élément de support 31 et du deuxième côté par un deuxième bassin basse pression 22 faisant partie du deuxième élément de support 41. Le premier bassin basse pression 21 comprend un conduit d'entrée 29 de liquide dans la pompe. Le conduit d'entrée 29 pourrait faire partie du deuxième bassin basse pression 22.

Dans le plan de la coupe visible à la figure 2, l'espace haute pression 10 est limité du premier côté par un premier bassin haute pression 11 faisant partie du premier élément de support 31 et du deuxième côté par un deuxième bassin haute pression 12 faisant partie du deuxième élément de support 41. Le premier bassin haute pression 11 comprend un conduit de sortie 19 de liquide dans la pompe, qui se trouve dans un autre plan que celui visible à la figure 2. Le conduit de sortie 19 pourrait faire partie du deuxième bassin haute pression 12.

Dans la réalisation préférée de l'invention, la pompe 100 comprend des évidements 13, 14, 23, 24 sous la forme de chanfreins dans les premier 31 et deuxième 41 éléments de support. Les premiers évidements 13, 23 sont situés à une interface entre le premier élément de support 31, la paroi cylindrique 5 et une première arête du pourtour cylindrique 28 de la couronne 2, de façon à être en communication fluidique avec le pourtour cylindrique 28. Les deuxièmes évidements 14, 24 sont situés à une interface entre le deuxième élément de support 41, la paroi cylindrique 5 et une deuxième arête du pourtour cylindrique 28 de la couronne 2, de façon à être en communication fluidique avec le pourtour cylindrique 28.

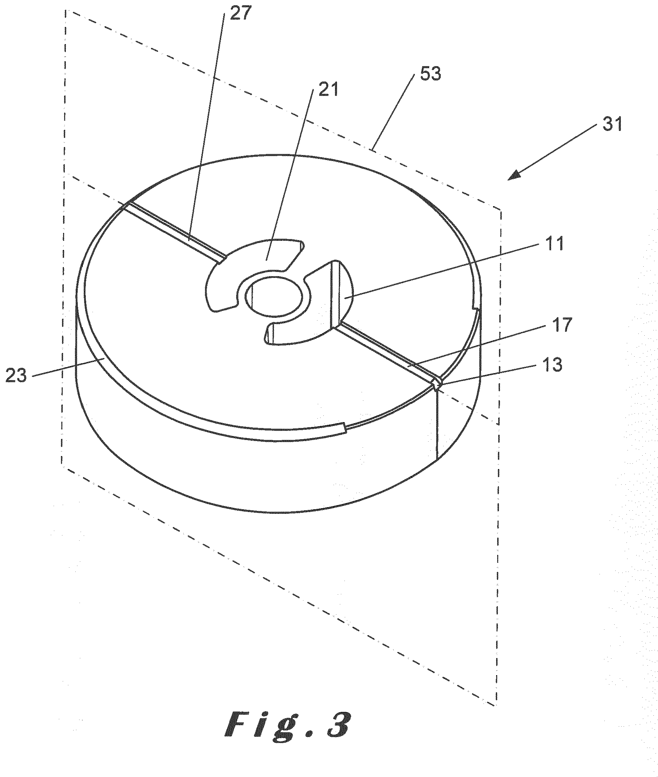

La figure 3 montre une vue en perspective du dessus du premier élément de support 31 selon la réalisation préférée de l'invention.

Dans cette réalisation de l'invention, le premier élément de support 31 comprend une première rainure radiale haute pression 17 et une première rainure radiale basse pression 27 qui sont dans le deuxième plan 53 et sont disposées contre la couronne 2. Le premier évidement haute pression 13 est en communication avec l'espace haute pression 10 grâce à un premier moyen d'acheminement haute pression qui comprend le premier bassin haute pression 11 et la première rainure radiale haute pression 17. Le premier évidement basse pression 23 est en communication avec l'espace basse pression 20 grâce à un premier moyen d'acheminement basse pression qui comprend le premier bassin basse pression 21 et la première rainure radiale basse pression 27.

Le premier évidement haute pression 13 est en arc de cercle et est symétrique par rapport au deuxième plan 53. Le premier évidement basse pression 23 est en arc de cercle et est symétrique par rapport au deuxième plan 53. Le premier évidement haute pression 13 et le premier évidemment basse pression 23 ne se touchent pas.

Préférentiellement, le premier évidement basse pression 23 est de plus grande extension angulaire que le premier évidement haute pression 13. Le premier évidement basse pression 23 peut avoir une extension angulaire de plus de 90°, plus préférentiellement de plus de 180°. Le premier évidement haute pression 13 peut avoir une extension angulaire de moins de 20°, plus préférentiellement de moins de 10°.

Dans la réalisation préférée de l'invention, le premier évidement basse pression 23 est partiellement du même côté du premier plan 54 que l'espace basse pression 20 et partiellement de l'autre côté. Le premier évidement haute pression 13 est totalement du même côté du premier plan 54 que l'espace haute pression 10.

Dans la réalisation préférée de l'invention, le deuxième élément de support 41 comprend des deuxièmes rainures et des deuxièmes évidements symétriques aux premières rainures et premiers évidements par rapport au troisième plan 55.

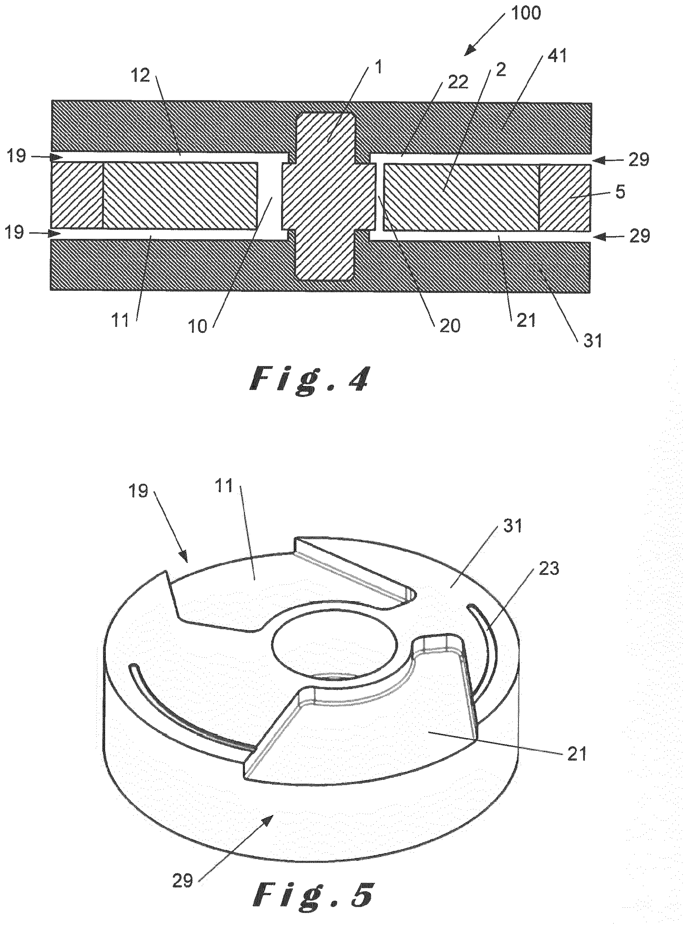

La figure 4 montre une vue en coupe verticale d'une pompe à engrenage 100 selon une première réalisation alternative de l'invention. La figure 5 montre une vue en perspective du dessus du premier élément de support 31 selon la première réalisation alternative de l'invention. Les premiers et deuxièmes bassins haute 11, 12 et basse pression, 21, 22 s'étendent axialement au-delà du pourtour cylindrique 28 de la couronne 2, au-dessus et en-dessous de la paroi cylindrique 5. Les premier et deuxième bassins basse pression 21, 22 servent de conduits d'entrée 29 à la pompe et les premier et deuxième bassins haute pression 11, 12 servent de conduits de sortie 19 à la pompe.

Dans la première réalisation alternative de l'invention, les premier et deuxième bassins basse pression 21, 22 forment à la fois les premier et deuxième moyens d'acheminement basse pression et partiellement les premier 23 et deuxième 24 évidements basse pression. Le premier 23 (respectivement deuxième 24) évidement basse pression comprend en outre une rainure en arc de cercle dans le premier 31 (respectivement deuxième 41) élément de support disposée en contact avec une première (respectivement deuxième) arête du pourtour cylindrique 28. Les premier 11 et deuxième 12 bassins haute pression forment à la fois les premier et deuxième moyens d'acheminement haute pression et les premier 13 et deuxième 14 évidements haute pression.

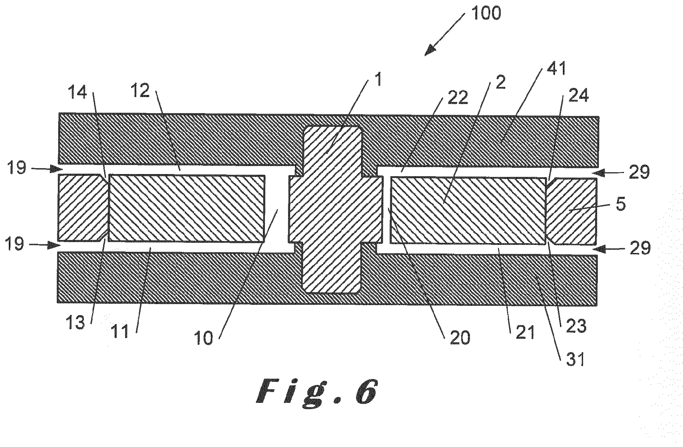

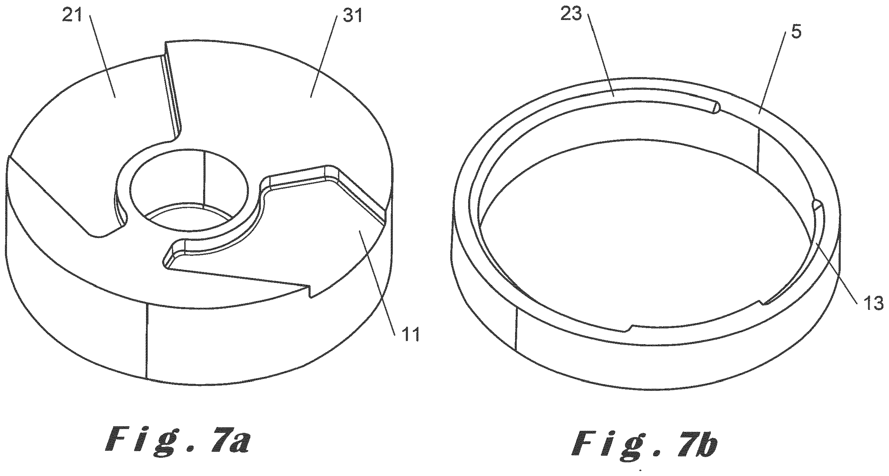

La figure 6 montre une vue en coupe verticale d'une pompe à engrenage 100 selon une deuxième réalisation alternative de l'invention. La figure 7a montre une vue en perspective du dessus du premier élément de support 31 selon la deuxième réalisation alternative de l'invention. La figure 7b montre une vue en perspective du dessous de la paroi cylindrique 5 selon la deuxième réalisation alternative de l'invention.

Dans la deuxième réalisation alternative de l'invention, les premiers et deuxièmes bassins haute et basse pression 11, 12, 21 et 22 s'étendent axialement au-delà du pourtour cylindrique 28 de la couronne 2, au-dessus et en-dessous de la paroi cylindrique 5. Les premier et deuxième bassins basse pression 21, 22 servent de conduits d'entrée 29 à la pompe et les premier et deuxième bassins haute pression 11, 12 servent de conduits de sortie 19 à la pompe.

Dans la deuxième réalisation alternative de l'invention, les premier 21 et deuxième 22 bassins basse pression forment à la fois les premier et deuxième moyens d'acheminement basse pression et partiellement les premier 23 et deuxième 24 évidements basse pression. Le premier 23 (respectivement deuxième 24) évidement basse pression comprend en outre un chanfrein en arc de cercle dans la paroi cylindrique 5, chanfrein qui est en contact avec une première (respectivement deuxième) arête du pourtour cylindrique 28.

Dans la deuxième réalisation alternative de l'invention, les premier 11 et deuxième 12 bassins haute pression forment à la fois les premier et deuxième moyens d'acheminement haute pression et partiellement les premier 13 et deuxième 14 évidements haute pression. Le premier 13 (respectivement deuxième 14) évidement haute pression comprend en outre un chanfrein en arc de cercle dans la paroi cylindrique 5, chanfrein qui est en contact avec la première (respectivement deuxième) arête du pourtour cylindrique 28.

Dans une réalisation de l'invention, la pompe 100 comprend un carter comprenant le premier élément de support 31 et un couvercle comprenant le deuxième élément de support 41, ou l'inverse.

Les caractéristiques des réalisations alternatives de l'invention sont potentiellement combinables entre elles, en particulier les caractéristiques différenciant ces réalisations alternatives de la réalisation préférée de l'invention. Il est par exemple possible que combiner les aimants 8 et la bobine 6 de la troisième réalisation alternative de l'invention avec les premier 31 et deuxième 41 éléments de support de la première ou de la deuxième réalisation alternative de l'invention.

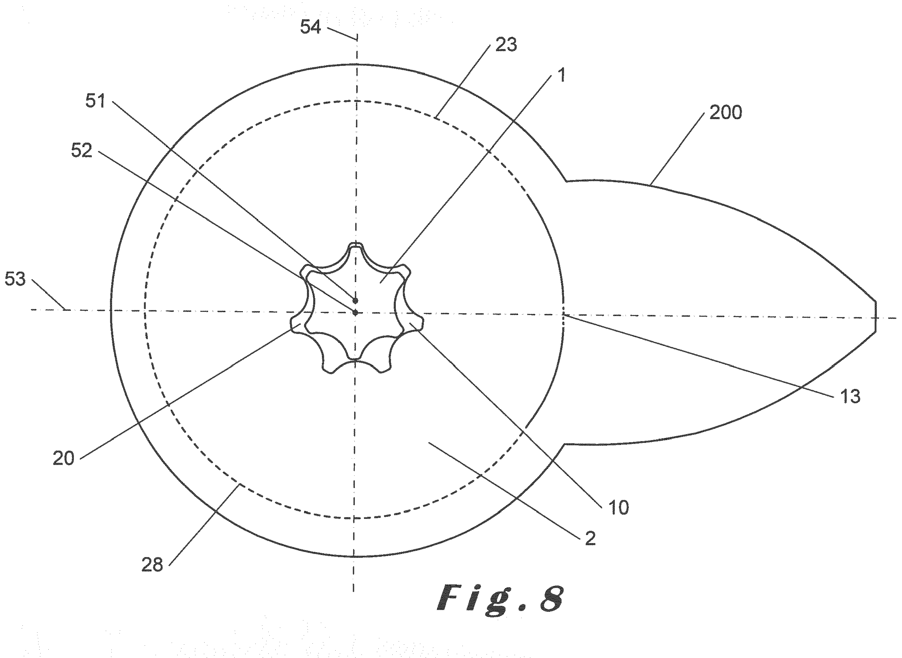

La figure 8 est une représentation de la pression radiale s'exerçant sur le pourtour cylindrique 28 de la couronne 2 dans une pompe 100 selon une réalisation préférée de l'invention. La représentation de la couronne 2 est située autour de la représentation du pignon 1. La représentation du pourtour cylindrique 28 comprend des parties pointillées qui correspondent à la position de la représentation du premier évidement basse pression 23 et à la position de la représentation du premier évidement haute pression 13. La partie du pourtour cylindrique 28 en traits pleins représente la séparation entre le premier évidement basse pression 23 et le premier évidement haute pression 13 L'espace entre les représentations de la couronne 2 et du pignon 1 comprend la représentation de l'espace haute pression 10 et la représentation de l'espace basse pression 20.

La pression radiale externe en tout point de la couronne 2 est représentée par la distance entre la représentation du pourtour cylindrique 28 et une courbe 200. La courbe 200 a été calculée numériquement par les inventeurs. La pression radiale est constante et relativement grande sur toute la partie du pourtour cylindrique 28 qui est en contact direct avec le premier évidement haute pression 13, c'est-à-dire sur la première partie du pourtour cylindrique 28. La pression radiale est constante et relativement faible sur toute la partie du pourtour cylindrique 28 qui est en contact direct avec le premier évidement basse pression 23, c'est-à-dire sur la deuxième partie du pourtour cylindrique 28. Sur la partie du pourtour cylindrique 28 qui n'est pas en contact direct avec un évidement, la pression radiale varie de manière linéaire.

En d'autres termes, l'invention concerne une pompe 100 à engrenage interne. La pompe 100 comprend un pignon 1, une couronne 2 disposée autour du pignon 1 et une paroi cylindrique 5 disposée autour de la couronne 2. Un élément de support 31 sur lequel reposent sur le pignon 1 et la couronne 2 comprend des moyens 11, 17 pour amener du liquide à haute pression vers un évidement 13 situé à la jonction entre la couronne 2 et la paroi cylindrique 5 et des moyens 21, 27 pour amener du liquide à basse pression vers un autre évidement 23 situé à un autre endroit de la jonction entre la couronne 2 et la paroi cylindrique 5. L'évidemment 13 permet de réduire la charge de la couronne 2 sur la paroi cylindrique 5.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Pompe (100) à engrenage interne comprenant:
• un pignon (1) apte à tourner autour d'un premier axe de rotation (51),
• une couronne (2) disposée autour du pignon (1), présentant un pourtour cylindrique (28) et apte à tourner autour d'un deuxième axe de rotation (52) différent du premier axe de rotation (51) et parallèle à ce dernier, le pignon (1) et la couronne (2) étant disposés de façon à délimiter un espace de travail comprenant un espace haute pression (10) et un espace basse pression (20),
• un premier élément de support (31) disposé d'un premier côté de la couronne (2) pour limiter son déplacement dans un premier sens (61) selon une première direction (60) essentiellement parallèle aux premier (51) et deuxième (52) axes de rotation,
• un deuxième élément de support (41) disposé d'un deuxième côté de la couronne (2) pour limiter son déplacement dans un deuxième sens (62) opposé au premier sens (61) et selon la première direction (60),
• une paroi cylindrique (5) disposée autour de la couronne (2) pour limiter son déplacement dans un plan essentiellement perpendiculaire au deuxième axe de rotation (52),
• un premier évidement haute pression (13) en arc de cercle et en contact fluidique avec une première partie du pourtour cylindrique (28) de la couronne (2),
• un premier évidement basse pression (23) en arc de cercle et en contact fluidique avec une deuxième partie du pourtour cylindrique (28) de la couronne (2), le premier évidement haute pression (13) et le premier évidemment basse pression (23) étant disjoints,
• un premier moyen d'acheminement haute pression formant une connexion fluidique entre l'espace haute pression (10) et le premier évidement haute pression (13), et
• un premier moyen d'acheminement basse pression formant une connexion fluidique entre l'espace basse pression (20) et le premier évidement basse pression (23),
**caractérisée en ce que**
• le premier évidemment haute pression (13) est symétrique par rapport à un deuxième plan (53) passant par le deuxième axe de rotation (52) et perpendiculaire à un premier plan (54) passant par les premier (51) et deuxième (52) axes de rotation, et **en ce que**
• le premier évidemment basse pression (23) est symétrique par rapport audit deuxième plan (53).

2. Pompe (100) à engrenage interne selon la revendication 1, **caractérisée en ce que** le premier évidement basse pression (23) est de plus grande extension angulaire que le premier évidement haute pression (13).

3. Pompe (100) à engrenage interne selon la revendication 1 ou 2, **caractérisée en ce que** l'extension angulaire du premier évidement basse pression (23) est supérieure à 90°, préférentiellement supérieure à 180°.

4. Pompe (100) à engrenage interne selon l'une quelconque des revendications précédentes, **caractérisée en ce que** le premier évidement haute pression (13) est au moins partiellement, préférentiellement totalement, du même côté du premier plan (54) que l'espace haute pression (10); et le premier évidement basse pression (23) est au moins partiellement du même côté du premier plan (54) que l'espace basse pression (20).

5. Pompe (100) à engrenage interne selon l'une quelconque des revendications précédentes, **caractérisée en ce que** le premier moyen d'acheminement haute pression comprend un premier bassin haute pression (11) dans le premier élément de support (31), et le premier moyen d'acheminement basse pression comprend un premier bassin basse pression (21) dans le premier élément de support (31).

6. Pompe (100) à engrenage interne selon la revendication précédente, **caractérisée en ce que** le premier bassin haute pression (11) comprend une partie traversant le premier élément de support (31) et faisant partie d'un conduit de sortie (19) de liquide de la pompe (100) et le premier bassin basse pression (21) comprend une partie traversant le premier élément de support (31) et faisant partie d'un conduit d'entrée (29) de liquide dans la pompe (100).

7. Pompe (100) à engrenage interne selon l'une quelconque des revendications précédentes, **caractérisée en ce que** le premier évidement haute pression (13), le premier évidement basse pression (23), le premier moyen d'acheminement haute pression et le premier moyen d'acheminement basse pression sont situés du premier côté de la couronne (2).

8. Pompe (100) à engrenage interne selon la revendication précédente, comprenant en outre, situés du deuxième côté de la couronne (2):
• un deuxième évidement haute pression (14) en arc de cercle, en contact fluidique avec le pourtour cylindrique (28) de la couronne (2) sur la première partie de ce dernier et symétrique par rapport au deuxième plan (53),
• un deuxième évidement basse pression (24) en arc de cercle, en contact fluidique avec le pourtour cylindrique (28) de la couronne (2) sur la deuxième partie de ce dernier et symétrique par rapport au deuxième plan (53), le deuxième évidement haute pression (14) et le deuxième évidemment basse pression (24) étant disjoints,
• un deuxième moyen d'acheminement haute pression formant une connexion fluidique entre l'espace haute pression (10) et le deuxième évidement haute pression (14), et
• un deuxième moyen d'acheminement basse pression formant une connexion fluidique entre l'espace basse pression (20) et le deuxième évidement basse pression (24).

9. Turbomachine comprenant une pompe (100) à engrenage interne selon l'une quelconque des revendications précédentes.

10. Aéronef comprenant une pompe (100) à engrenage interne selon l'une quelconque des revendications 1 à 8.

## Patentansprüche

1. Innengetriebepumpe (100), umfassend:
• ein Rad (1), das imstande ist, sich um eine erste Drehachse (51) zu drehen,
• einen Kranz (2), der um das Rad (1) angeordnet ist, einen zylindrischen Umfang (28) aufweist und imstande ist, sich um eine zweite Drehachse (52) zu drehen, die sich von der ersten Drehachse (51) unterscheidet und parallel zu dieser Letzteren verläuft, wobei das Rad (1) und der Kranz (2) so angeordnet sind, dass sie einen Arbeitsraum begrenzen, der einen Hochdruckraum (10) und einen Niederdruckraum (20) umfasst,
• ein erstes Stützelement (31), das auf einer ersten Seite des Kranzes (2) angeordnet ist, um seine Verschiebung in eine erste Ausrichtung (61) gemäß einer ersten Richtung (60) zu begrenzen, die im Wesentlichen parallel zu der ersten (51) und zweiten (52) Drehachse verläuft,
• ein zweites Stützelement (41), das auf einer zweiten Seite des Kranzes (2) angeordnet ist, um seine Verschiebung in eine zweite Ausrichtung (62), die der ersten Ausrichtung (61) entgegengesetzt ist, und gemäß der ersten Richtung (60) zu begrenzen,
• eine zylindrische Wand (5), die um den Kranz (2) angeordnet ist, um seine Verschiebung in einer im Wesentlichen senkrecht zur zweiten Drehachse (52) liegenden Ebene zu begrenzen,
• eine erste Hochdruckaussparung (13) in Kreisbogenform und in fluidischem Kontakt mit einem ersten Teil des zylindrischen Umfangs (28) des Kranzes (2),
• eine erste Niederdruckaussparung (23) in Kreisbogenform und in fluidischem Kontakt mit einem zweiten Teil des zylindrischen Umfangs (28) des Kranzes (2), wobei die erste Hochdruckaussparung (13) und die erste Niederdruckaussparung (23) getrennt sind,
• ein erstes Hochdrucktransportmittel, das eine fluidische Verbindung zwischen dem Hochdruckraum (10) und der ersten Hochdruckaussparung (13) bildet, und
• ein erstes Niederdrucktransportmittel, das eine fluidische Verbindung zwischen dem Niederdruckraum (20) und der ersten Niederdruckaussparung (23) bildet,
**dadurch gekennzeichnet, dass**
• die erste Hochdruckaussparung (13) in Bezug auf eine zweite Ebene (53) symmetrisch ist, die durch die zweite Drehachse (52) verläuft, und senkrecht zu einer ersten Ebene (54), die durch die erste (51) und zweite (52) Drehachse verläuft, und dadurch, dass
• die erste Niederdruckaussparung (23) in Bezug auf die zweite Ebene (53) symmetrisch ist.

2. Innengetriebepumpe (100) nach Anspruch 1, **dadurch gekennzeichnet, dass** die erste Niederdruckaussparung (23) von einer größeren Winkelausdehnung ist, als die erste Hochdruckaussparung (13).

3. Innengetriebepumpe (100) nach Anspruch 1 oder 2, **dadurch gekennzeichnet, dass** die Winkelausdehnung der ersten Niederdruckaussparung (23) größer als 90°, vorzugsweise größer als 180°ist.

4. Innengetriebepumpe (100) nach einem der vorstehenden Ansprüche, **dadurch gekennzeichnet, dass** die erste Hochdruckaussparung (13) mindestens teilweise, vorzugsweise gänzlich, auf derselben Seite der ersten Ebene (54) liegt wie der Hochdruckraum (10); und die erste Niederdruckaussparung (23) mindestens teilweise auf derselben Seite der ersten Ebene (54) liegt wie der Niederdruckraum (20).

5. Innengetriebepumpe (100) nach einem der vorstehenden Ansprüche, **dadurch gekennzeichnet, dass** das erste Hochdrucktransportmittel ein erstes Hochdruckbecken (11) in dem ersten Stützelement (31) umfasst und das erste Niederdrucktransportmittel ein erstes Niederdruckbecken (21) in dem ersten Stützelement (31) umfasst.

6. Innengetriebepumpe (100) nach dem vorstehenden Anspruch, **dadurch gekennzeichnet, dass** das erste Hochdruckbecken (11) einen Teil umfasst, der das erste Stützelement (31) durchsetzt und Teil einer Flüssigkeitsablaufleitung (19) der Pumpe (100) ist, und das erste Niederdruckbecken (21) einen Teil umfasst, der das erste Stützelement (31) durchsetzt und Teil einer Flüssigkeitseingangsleitung (29) in der Pumpe (100) ist.

7. Innengetriebepumpe (100) nach einem der vorstehenden Ansprüche, **dadurch gekennzeichnet, dass** sich die erste Hochdruckaussparung (13), die erste Niederdruckaussparung (23), das erste Hochdrucktransportmittel und das erste Niederdrucktransportmittel auf der ersten Seite des Kranzes (2) befinden.

8. Innengetriebepumpe (100) nach dem vorstehenden Anspruch, weiter umfassend, auf der zweiten Seite des Kranzes (2) befindlich:
• eine zweite Hochdruckaussparung (14) in Kreisbogenform und in fluidischem Kontakt mit dem zylindrischen Umfang (28) des Kranzes (2) auf dem ersten Teil dieses Letzteren und symmetrisch in Bezug auf die zweite Ebene (53),
• eine zweite Niederdruckaussparung (24) in Kreisbogenform und in fluidischem Kontakt mit dem zylindrischen Umfang (28) des Kranzes (2) auf dem zweiten Teil dieses Letzteren und symmetrisch in Bezug auf die zweite Ebene (53), wobei die zweite Hochdruckaussparung (14) und die zweite Niederdruckaussparung (24) getrennt sind,
• ein zweites Hochdrucktransportmittel, das eine fluidische Verbindung zwischen dem Hochdruckraum (10) und der zweiten Hochdruckaussparung (14) bildet, und
• ein zweites Niederdrucktransportmittel, das eine fluidische Verbindung zwischen dem Niederdruckraum (20) und der zweiten Niederdruckaussparung (24) bildet.

9. Turbomaschine, umfassend eine Innengetriebepumpe (100) nach einem der vorstehenden Ansprüche.

10. Luftfahrzeug, umfassend eine Innengetriebepumpe (100) nach einem der Ansprüche 1 bis 8.

## Claims

1. Internal gear pump (100) comprising:
• a pinion (1) capable of rotating about a first axis of rotation (51),
• a ring (2) arranged around the pinion (1), presenting a cylindrical perimeter (28) and capable of rotating about a second axis of rotation (52) different from the first axis of rotation (51) and parallel to the latter, the pinion (1) and the ring (2) being arranged so as to delimit a workspace comprising a high-pressure space (10) and a low-pressure space (20),
• a first support element (31) arranged on a first side of the ring (2) to limit its movement in a first way (61) according to a first direction (60) essentially parallel to the first (51) and second (52) axes of rotation,
• a second support element (41) arranged on a second side of the ring (2) to limit its movement in a second way (62) opposite the first way (61) and according to the first direction (60),
• a cylindrical wall (5) arranged around the ring (2) to limit its movement in a plane, essentially perpendicular to the second axis of rotation (52),
• a first, circular arched high-pressure recess (13) and in fluidic contact with a first portion of the cylindrical perimeter (28) of the ring (2),
• a first, circular arched low-pressure recess (23) and in fluidic contact with a second portion of the cylindrical perimeter (28) of the ring (2), the first high-pressure recess (13) and the first low-pressure recess (23) being disjointed,
• a first high-pressure conveyance means forming a fluidic connection between the high-pressure space (10) and the first high-pressure recess (13), and
• a first low-pressure conveyance means forming a fluidic connection between the low-pressure space (20) and the first low-pressure recess (23),
**characterised in that**
• the first high-pressure recess (13) is symmetrical with respect to a second plane (53) passing via the second axis of rotation (52) and perpendicular to a first plane (54) passing via the first (51) and second (52) axes of rotation, and **in that**
• the first low-pressure recess (23) is symmetrical with respect to said second plane (53).

2. Internal gear pump (100) according to claim 1, **characterised in that** the first low-pressure recess (23) is of greater angular extension than the first high-pressure recess (13).

3. Internal gear pump (100) according to claim 1 or 2, **characterised in that** the angular extension of the first low-pressure recess (23) is greater than 90°, preferably greater than 180°.

4. Internal gear pump (100) according to any one of the preceding claims, **characterised in that** the first high-pressure recess (13) is at least partially, preferably totally, on the same side of the first plane (54) as the high-pressure space (10); and the first low-pressure recess (23) is at least partially on the same side of the first plane (54) as the low-pressure space (20).

5. Internal gear pump (100) according to any one of the preceding claims, **characterised in that** the first high-pressure conveyance means comprises a first high-pressure basin (11) in the first support element (31), and the first low-pressure conveyance means comprises a first low-pressure basin (21) in the first support element (31).

6. Internal gear pump (100) according to the preceding claim, **characterised in that** the first high-pressure basin (11) comprises a portion passing through the first support element (31) and forming part of a liquid outlet duct (19) of the pump (100) and the first low-pressure basin (21) comprises a portion passing through the first support element (31) and forming part of a liquid inlet duct (29) in the pump (100).

7. Internal gear pump (100) according to any one of the preceding claims, **characterised in that** the first high-pressure recess (13), the first low-pressure recess (23), the first high-pressure conveyance means and the first low-pressure conveyance means are located on the first side of the ring (2).

8. Internal gear pump (100) according to the preceding claim, further comprising, located on the second side of the ring (2):
• a second circular arched high-pressure recess (14), in fluidic contact with the cylindrical perimeter (28) of the ring (2) on the first portion of the latter and symmetrical with respect to the second plane (53),
• a second circular arched low-pressure recess (24), in fluidic contact with the cylindrical perimeter (28) of the ring (2) on the second portion of the latter and symmetrical with respect to the second plane (53), the second high-pressure recess (14) and the second low-pressure recess (24) being disconnected,
• a second high-pressure conveyance means forming a fluidic connection between the high-pressure space (10) and the second high-pressure recess (14), and
• a second low-pressure conveyance means forming a fluidic connection between the low-pressure space (20) and the second low-pressure recess (24).

9. Turbomachine comprising an internal gear pump (100) according to any one of the preceding claims.

10. Aircraft comprising an internal gear pump (100) according to any one of claims 1 to 8.
